# FASCICULE DE BREVET EUROPEEN

(11) **EP 4 570 115 B1**
(45) Date de publication et mention de la délivrance du brevet: **05.08.2026**
(21) Numéro de dépôt: 24218502.3
(22) Date de dépôt: 09.12.2024
(51) Int. Cl.: A44C 27/00, C03C 3/04, C03C 27/06

(54) **PROCEDE DE FABRICATION D'UN OBJET DECORATIF COMPRENANT DES COMPOSANTS EN EMAIL**
VERFAHREN ZUR HERSTELLUNG EINES DEKORATIVEN GEGENSTANDES MIT EMAIL-KOMPONENTEN
METHOD FOR MANUFACTURING A DECORATIVE OBJECT COMPRISING ENAMEL COMPONENTS

(30) Priorité: 11.12.2023 CH 13812023
(43) Date de publication de la demande: 18.06.2025
(73) Titulaire: Richemont International S.A., 1752 Villars-sur-Glâne (CH)
(72) Inventeur: MORARD, Vivien, 74960 Annecy (FR); PONCET, Hélène, 74270 Chavannaz (FR)
(74) Mandataire: Novagraaf International SA

(56) Documents cités:
- EP-A1- 2 138 323
- EP-A1- 3 035 130
- JP-A- 2004 010 409
- US-A1- 2012 304 694

## Description

### Domaine technique de l'invention

La présente invention concerne de manière générale les objets décoratifs comprenant des composants en matériau amorphe, vitreux ou vitrifié, comme les objets décoratifs avec des composants en émail ou comprenant une portion en émail. De tels objets décoratifs peuvent être intégrés dans une pièce d'horlogerie ou dans une pièce de joaillerie (ou même former une pièce de joaillerie). La présente invention concerne de tels objets décoratifs et leur procédé de fabrication.

### État de la technique

Dans l'art antérieur des objets décoratifs en matériau amorphe, vitreux ou vitrifié, comme les objets décoratifs en émail, on connait le document US6514605B2 qui décrit un procédé de fabrication d'un objet décoratif avec des pierres précieuses partiellement noyées dans une céramique et comprenant une étape de chauffage des pierres précieuses posées sur céramique, le chauffage étant conduit au dessus d'une température de vitrification pour noyer et attacher les pierres précieuses dans la céramique. En contrepartie, ce procédé ne permet pas de proposer de positionnement précis des pierres précieuses par rapport au reste de l'objet décoratif ni comment attacher des composants en émail entre eux.

Le document CH710716A2 décrit quant à lui un procédé pour fabriquer un objet décoratif, avec une étape de fixation d'un décor sur un substrat, avec l'aide d'une pâte à braser. L'usage de pâte à braser peut affecter notablement l'aspect visuel de l'objet décoratif et cela limite les possibilités offertes pour proposer des objets décoratifs comprenant des composants en émail.

Le document EP 3035130 A1 se rapporte à un procédé de réalisation d'un élément décoré en émail d'une pièce d'horlogerie ou de bijouterie.

### Exposé de l'invention

Un but de la présente invention est de répondre aux inconvénients de l'art antérieur mentionnés ci-dessus et en particulier, tout d'abord, de proposer un procédé de fabrication d'un objet décoratif comprenant des composants en émail, et qui permet d'assembler des composants en émail tout en s'affranchissant des limitations esthétiques mentionnées. A cet effet, l'invention est définie par les revendications.

Pour cela un premier aspect de l'invention concerne un procédé de fabrication d'un objet décoratif, comprenant les étapes suivantes :
- se munir d'un premier composant, au moins partiellement vitrifié comprenant au moins 40% de silice en poids, formé par exemple en émail, et présentant une première température d'activation,
- se munir d'un deuxième composant, au moins partiellement vitrifié comprenant au moins 40% de silice en poids, formé par exemple en émail, et présentant une deuxième température d'activation,
- préformer une ébauche en accolant au moins une partie, de préférence latérale, du premier composant et au moins une partie, de préférence latérale, du deuxième composant,
- appliquer un traitement thermique en chauffant l'ébauche au moins à une température supérieure à la première température d'activation, et/ou à la deuxième température d'activation pour solidariser le premier composant et le deuxième composant.

Autrement dit, le premier aspect de l'invention peut concerner un procédé de fabrication d'un objet décoratif, comprenant les étapes suivantes :
- se munir d'un premier composant, au moins partiellement vitrifié comprenant au moins 40% de silice en poids, formé par exemple en émail, et présentant une première température dite de strain (ou déformation en langue française) et/ou une première température dite de Littleton (ou point de ramollissement) et/ou une première température dite d'annealing (ou recuit en langue française) et/ou une première température de transition vitreuse et/ou une première température de fusion,
- se munir d'un deuxième composant, au moins partiellement vitrifié comprenant au moins 40% de silice en poids, formé par exemple en émail, et présentant une deuxième température dite de strain et/ou une deuxième température dite de Littleton (ou point de ramollissement) et/ou une deuxième température dite d'annealing et/ou une deuxième température de transition vitreuse et/ou une deuxième température de fusion,
- préformer une ébauche en accolant au moins une partie, de préférence latérale, du premier composant et au moins une partie, de préférence latérale, du deuxième composant,
- appliquer un traitement thermique en chauffant l'ébauche au moins à une température supérieure à la première température dite de strain et/ou la première température dite de Littleton et/ou la première température dite d'annealing et/ou la première température de transition vitreuse et/ou la première température de fusion, et/ou la deuxième température dite de strain et/ou la deuxième température dite de Littleton et/ou la deuxième température dite d'annealing et/ou la deuxième température de transition vitreuse et/ou la deuxième température de fusion pour solidariser le premier composant et le deuxième composant.

Selon la mise en œuvre ci-dessus, le procédé comprend une étape consistant à accoler le premier composant et le deuxième composant dessus-dessous, empilés, superposés, juxtaposés, flanc à flanc, ou côte à côte. Les parois ou parties, de préférence latérales mais aussi supérieures ou inférieures, étant ainsi jointes ou accostées ou accolées les unes aux autres, une étape de traitement thermique à une température suffisamment élevée permet de solidariser premier composant et le deuxième composant entre eux. En d'autres termes, le traitement thermique peut être effectué à une température suffisamment élevée et suffisamment longtemps pour permettre de former des liaisons mécaniques entre le premier composant et le deuxième composant. Le traitement thermique peut être effectué à une température suffisamment élevée et suffisamment longtemps pour permettre des déformations microscopiques ou même macroscopiques dans une certaine mesure entre le premier composant et le deuxième composant. En tout état de cause, le traitement thermique peut être effectué à une température suffisamment élevée et suffisamment longtemps pour permettre de former des liaisons et/ou des mélanges et/ou des interpénétrations de matière au moins au niveau de l'interface de contact entre les parois ou parties, de préférence latérales, du premier composant et du deuxième composant.

Le procédé de fabrication peut être défini par les caractéristiques suivantes, prises individuellement ou en combinaison.

Selon un mode de réalisation, le traitement thermique comprend au moins une étape de refroidissement avec une vitesse de descente en température inférieure à 10°C/minute, de préférence inférieure à 5°C/minute, et de préférence inférieure à 3°C/minute.

Selon un mode de réalisation, le traitement thermique comprend au moins une étape de chauffage avec une vitesse de montée en température inférieure à 15°C/minute, et de préférence inférieure à 10°C/ minute.

Selon un mode de réalisation, le traitement thermique comprend au moins une étape de maintien à un palier de température maximale de chauffage d'au moins 15 minutes, de préférence d'au moins 30 minutes (par exemple pour des composants d'épaisseur comprise entre 0.5 mm et 2.5 mm) et de préférence d'au moins 50 minutes (et par exemple d'au moins 1h30 pour des composants d'épaisseur supérieure à 4 mm).

Selon un mode de réalisation, le traitement thermique comprend au moins une étape de maintien à un palier de température maximale de chauffage pour permettre d'atteindre à cœur des composants la première température dite de strain et/ou la première température dite de Littleton et/ou la première température dite d'annealing et/ou la première température de transition vitreuse et/ou la première température de fusion, et/ou la deuxième température dite de strain et/ou la deuxième température dite de Littleton et/ou la deuxième température dite d'annealing et/ou la deuxième température de transition vitreuse et/ou la deuxième température de fusion.

Selon un mode de réalisation :
- le préformage de l'ébauche consiste à accoler ladite au moins une partie, de préférence latérale, du premier composant et ladite une partie, de préférence latérale, du deuxième composant avec un jeu inférieur à 0.15 mm, de préférence inférieur à 0.10 mm, et de préférence inférieur à 0.06 mm. Autrement dit, Les parois ou parties, de préférence latérales, du premier composant et du deuxième composant sont ainsi jointes ou accostées les unes aux autres sans jeu (c'est-à-dire qu'il y a contact au moins ponctuellement) ou alors avec un faible jeu, par exemple de 0.05 mm. Lors du traitement thermique, des jonctions peuvent se faire aux points de contact ou grâce au faible jeu.

Selon un mode de réalisation, le premier composant présente une première face de base plane et/ou le deuxième composant présente une deuxième face de base plane. Autrement dit, le premier composant et/ou le deuxième composant peut être plan, c'est à dire peut présenter une dimension hors tout (longueur et/ou largeur) bien supérieure à une épaisseur.

Selon un mode de réalisation, le procédé comprend une étape initiale consistant à :
- former ou usiner ladite au moins une partie, de préférence latérale, du premier composant avec un premier angle incliné par rapport à une normale de la première face de base plane, et/ou
- former ou usiner ladite au moins une partie, de préférence latérale, du deuxième composant avec un deuxième angle incliné par rapport à une normale de la deuxième face de base plane. Les parois ou parties, de préférence latérales, sont inclinées par rapport à une direction , de préférence verticale, (par exemple la direction de l'épaisseur) pour bien rattraper les jeux et/ou garantir un contact entre les composants avant et/ou pendant le traitement thermique.

Selon un mode de réalisation, le premier angle et/ou le deuxième angle sont compris dans une plage de valeur allant de 1° à 45°, de préférence de 5° à 30°, de préférence de 5° à 20°.

Selon un mode de réalisation, le premier angle et le deuxième angle sont égaux.

Selon un mode de réalisation, le premier angle et le deuxième angle sont complémentaires.

Selon un mode de réalisation, le premier angle et le deuxième angle sont prévus pour permettre un emboîtement du deuxième composant dans le premier composant lors du préformage de l'ébauche.

Selon un mode de réalisation, seul le premier composant repose sur un support de cuisson, et/ou un jeu est prévu entre le deuxième composant et le support de cuisson. Autrement dit, le deuxième composant n'est supporté que par le premier composant, et si les parois ou parties en contact, de préférence latérales, sont inclinées, cela garantit un assemblage sans jeu.

Selon un mode de réalisation, le procédé de fabrication comprend une étape consistant à déposer entre ladite au moins une partie, de préférence latérale, du premier composant et ladite au moins une partie, de préférence latérale, du deuxième composant une matière de liaison agencée pour fondre ou se vitrifier lors du traitement thermique. Selon un mode de réalisation la matière de liaison peut présenter une température de transition vitreuse et/ou une température de fusion sensiblement égale ou inférieure à la première température de transition vitreuse et/ou la première température de fusion, et/ou la deuxième température de transition vitreuse et/ou la deuxième température de fusion et/ou la température maximale du traitement thermique. Selon un mode de réalisation la matière de liaison n'est pas une pâte à braser. Selon un mode de réalisation la matière de liaison est exempte de poudre métallique ou de billes métallique. Autrement dit, la matière de liaison n'est pas prévue pour former une liaison métallique entre le premier composant et deuxième composant. Selon un mode de réalisation, la matière de liaison est un composant vitrifiable, et/ou comprend au moins 40% en masse de silice, de l'alumine, du calcium, du sodium, de l'oxyde de titane, et au moins un colorant. Selon un mode de réalisation, la matière de liaison comprend au moins un colorant similaire à au moins un colorant du premier composant et/ou du deuxième composant. Selon un mode de réalisation préféré, la matière de liaison comprend le ou les mêmes colorants que le premier composant et/ou que le deuxième composant. Ainsi, la matière de liaison est difficilement perceptible, et l'aspect final est amélioré.

Selon un mode de réalisation, la température maximale de chauffage est comprise entre 500°C et 1200°C.

Selon un mode de réalisation, le traitement thermique est précédé ou comprend une étape d'agencement ou de positionnement d'au moins un support réfractaire sur le premier composant et/ou le deuxième composant pour assurer un maintien en place, au moins pendant le traitement thermique, et/ou lors de manipulations avant le traitement thermique. Selon un mode de réalisation, l'agencement ou le positionnement d'au moins un support réfractaire est prévu pour maintenir un effort de plaquage entre le premier composant et le deuxième composant.

Selon un mode de réalisation, le premier composant et/ou le deuxième composant :
- présente une épaisseur inférieure à 10 mm, de préférence inférieure à 6 mm, et de préférence inférieure à 3 mm, et/ou
- présente une matière homogène, ou présente une matière hétérogène, telle qu'une matière multicouches ou avec des veines de matières différentes, et/ou
- comprend au moins 40% en masse de silice, de l'alumine, du calcium, du sodium, de l'oxyde de titane, et au moins un colorant, et/ou
- est exempte de substrat ou d'insert métallique, ou de substrat ou d'insert céramique ou de lave, et/ou
- présente au moins une face de base plane.

Selon un mode de réalisation, le premier composant et/ou le deuxième composant peut être non métallique, et/ou exempt de partie ou noyau ou substrat métallique, ce qui n'empêche pas le premier composant et/ou le deuxième composant de comprendre des composants métalliques dans une proportion inférieure à 40% en poids, de préférence dans une proportion inférieure à 20% en poids, et encore plus préférentiellement dans une proportion inférieure à 10% en poids.

Selon un mode de réalisation :
- la première température d'activation est une première température dite de strain (ou déformation en langue française) et/ou une première température dite de Littleton (ou point de ramollissement) et/ou une première température dite d'annealing (ou recuit en langue française) et/ou une première température de transition vitreuse et/ou une première température de fusion, et/ou
- la deuxième température d'activation est une deuxième température dite de strain et/ou une deuxième température dite de Littleton (ou point de ramollissement) et/ou une deuxième température dite d'annealing et/ou une deuxième température de transition vitreuse et/ou une deuxième température de fusion.

Selon un mode de réalisation, le procédé de fabrication peut être exempt d'effort de pressage. Selon un mode de réalisation, le procédé de fabrication peut être exempt d'effort de plaquage ou de forgeage ou de pressage conduisant à une déformation d'un composant en émail pour le conformer ou le faire entrer dans une cavité. Le propre poids des composants peut toutefois conduire à des déformations mineures lors du procédé (typiquement, les déformations sont inférieures à 10%, de préférence inférieures à 5%, de préférence inférieures à 2%, de préférence inférieures à 1%, de préférence inférieures à 0,5%). Une déformation peut être quantifiée par le ratio de la variation d'une dimension sur la dimension initiale (ε (%) = ΔL/L x 100). On peut bien entendu prévoir un effort de maintien pour éviter que les composants ne bougent entre eux lors des manipulations et/ou lors du traitement thermique (surtout si un chauffage par convection ou si un soufflage d'air chaud est prévu), mais un tel effort de maintien n'a pas pour but de forcer une conformation ou déformation significative des pièces. Selon un mode de réalisation, au moins une dimension, et de préférence toutes les dimensions, du premier composant et/ou du deuxième composant sont identiques avant et après le procédé de fabrication, (à ± 10% près, de préférence à ± 5% près, de préférence à ± 2% près, de préférence à ± 1% près, de préférence à ± 0,5% près).

Un deuxième aspect de l'invention se rapporte à un objet décoratif formé par le procédé de fabrication selon le premier aspect de l'invention.

Un troisième aspect de l'invention se rapporte à une pièce d'horlogerie ou de joaillerie formée par, ou comprenant, un objet décoratif selon le deuxième aspect de l'invention.

Selon un mode de réalisation, on peut prévoir de mesurer les températures de strain, de Littleton, d'annealing, de transition vitreuse, de fusion selon la norme ISO 7884-1:1987, et/ou ISO 7884-2:1987, et/ou ISO 7884-3:1987, et/ou ISO 7884-4:1987, et/ou ISO 7884-5:1987, et/ou ISO 7884-6:1987, et/ou ISO 7884-7:1987, et/ou ISO 7884-8:1987.

Dans la présente demande, la température de transition vitreuse d'un verre (ou d'un corps vitreux comme un émail) peut être définie comme étant le milieu de l'intervalle de température dans lequel il devient progressivement plus visqueux et passe de l'état solide à l'état liquide.

Dans la présente demande, la température de fusion peut être considérée comme la température à laquelle le corps considéré commence à devenir liquide. Dans le cas d'un corps pur ou eutectique, il s'agit de la température à laquelle les états liquide et solide de cette substance peuvent coexister à l'équilibre. Si l'on chauffe la substance (initialement solide) elle fond à cette température et la température ne peut pas augmenter tant que tout le solide n'a pas disparu. Dans le cas d'un corps non-pur ou non-eutectique, on peut considérer que la température de fusion est celle à laquelle au moins un des constituants du corps non-pur ou non-eutectique commence à fondre.

On peut prévoir de mesurer la température de transition vitreuse comme la température de fusion avec une technique de calorimétrie différentielle à balayage (en anglais, Differential Scanning Calorimetry ou DSC). On peut prévoir par exemple de mesurer ces températures en chauffant ou en refroidissant un échantillon à une vitesse de 3°C/minute.

### Description des figures

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
[fig. 1] représente une vue d'un objet décoratif fabriqué selon un procédé selon l'invention ;
[fig. 2] représente des étapes du procédé selon l'invention pour fabriquer l'objet décoratif de la figure 1 ;
[fig. 3] représente une vue éclatée des composants prévus pour fabriquer un objet décoratif de la figure 1 ;
[fig. 4] représente une vue en coupe de l'objet décoratif de la figure 1 ;
[fig. 5] représente une vue en coupe d'une première variante de l'objet décoratif de la figure 1 ;
[fig. 6] représente une vue en coupe d'une deuxième variante de l'objet décoratif de la figure 1 ;
[fig. 7] représente une vue en coupe d'une troisième variante de l'objet décoratif de la figure 1 ;
[fig. 8] représente une vue en coupe d'une quatrième variante de l'objet décoratif de la figure 1 ;
[fig. 9] représente une vue en coupe d'une cinquième variante de l'objet décoratif de la figure 1.

### Description détaillée de mode(s) de réalisation

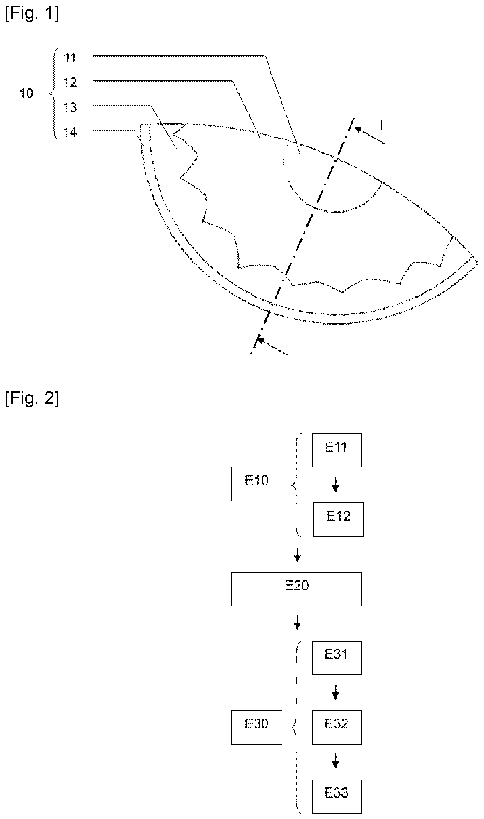

La figure 1 représente un objet décoratif 10 selon l'invention, fabriqué selon le procédé de fabrication selon l'invention et décrit ci-dessous aux passages relatifs à la figure 2.

La figure 1 représente donc en vue de face un objet décoratif 10 comprenant plusieurs composants en émail. Autrement dit, l'objet décoratif 10 comprend des composants vitrifiés ou vitreux (amorphes) et comprenant au moins 40% de silice en poids, par exemple environ 55% en masse, et notamment au moins l'un ou toute combinaison des composés suivants: de l'alumine, de l'oxyde de bore, du calcium, du sodium, de l'oxyde de titane, un ou plusieurs colorants.

L'objet décoratif de la figure 1 comprend notamment les composants suivants :
- un cœur central 11,
- une pièce annulaire dentée 12 agencée autour du cœur central 11,
- une couronne dentée 13 agencée autour de la pièce annulaire dentée 12,
- une ceinture 14 agencée autour de la couronne dentée 13 et formant une partie de la périphérie de l'objet décoratif 10. Dans cet exemple de réalisation, les composants (cœur central 11, pièce annulaire dentée 12, couronne dentée 13, ceinture 14) sont tous en émail, mais on peut prévoir de n'avoir que deux composants en émail. Dans cet exemple, comme tous les composants sont en émail, n'importe lequel peut être considéré comme un premier composant, et n'importe quel autre de ces composants peut être considéré comme un deuxième composant, pour peu qu'il soit adjacent au premier composant.

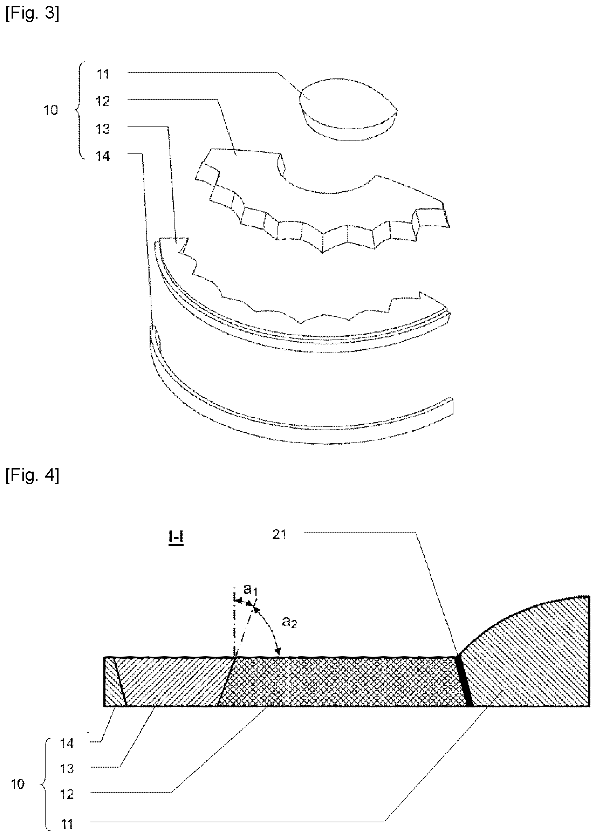

Sur l'exemple de la figure 1, l'objet décoratif 10 présente une forme effilée, en amande, mais on peut prévoir toute autre forme. Comme cela sera visible figures 3 et 4, l'objet décoratif 10 présente une face arrière plane et une forme générale plate (c'est-à-dire que sa dimension hors tout est bien supérieure à son épaisseur). Cependant, ces caractéristiques ne sont pas limitatives.

La figure 2 représente des étapes d'un procédé selon l'invention pur fabriquer l'objet décoratif 10 selon l'invention. En particulier, on peut prévoir les étapes ci-dessous.

E10 : préparer des composants pour former l'objet décoratif, avec :
- E11 : se munir d'un premier composant (n'importe lequel du cœur central 11, de la pièce annulaire dentée 12, de la couronne dentée 13, de la ceinture 14) au moins partiellement vitrifié comprenant au moins 40% de silice en poids, formé par exemple en émail, et présentant une première température de transition vitreuse et/ou une première température de fusion,
- E12 : se munir d'un deuxième composant (n'importe lequel autre composant du cœur central 11, de la pièce annulaire dentée 12, de la couronne dentée 13, de la ceinture 14), au moins partiellement vitrifié comprenant au moins 40% de silice en poids, formé par exemple en émail, et présentant une deuxième température de transition vitreuse et/ou une deuxième température de fusion.

E20 : préformer une ébauche en accolant au moins une partie, de préférence latérale, du premier composant et au moins une partie, de préférence latérale, du deuxième composant.

E30 : appliquer un traitement thermique en chauffant l'ébauche au moins à une température supérieure à la première température de transition vitreuse et/ou la première température de fusion, et/ou la deuxième température de transition vitreuse et/ou la deuxième température de fusion pour solidariser le premier composant et le deuxième composant, avec les étapes suivantes :
- E31 : une étape de chauffage avec une vitesse de montée en température inférieure à 15°C/minute, et de préférence inférieure à 10°C/ minute,
- E32 : une étape de maintien à un palier de température maximale de chauffage d'au moins 15 minutes, de préférence d'au moins 30 minutes et de préférence d'au moins 50 minutes,
- E33 : une étape de refroidissement avec une vitesse de descente en température inférieure à 10°C/minute, de préférence inférieure à 5°C/minute, et de préférence inférieure à 3°C/minute.

A l'issue des étapes ci-dessus décrite, on obtient un objet décoratif d'un seul tenant, avec des composants en émail qui sont solidarisés entre eux, la solidarisation ayant été effectuée ou générée pendant le traitement thermique.

La figure 3 représente une vue éclatée des composants prévus pour fabriquer un objet décoratif de la figure 1. On peut noter que toutes les parois ou parties latérales de chaque composant adjacentes aux parois ou parties latérales d'un autre composant sont complémentaires pour procurer un ajustement et un préformage de l'ébauche sans jeu. Dans le détail :
- les parois incurvées du cœur central 11 et de la pièce annulaire dentée 12 en regard l'une de l'autre ou adjacentes sont complémentaires et présentent le même rayon / la même courbure...,
- les parois dentées de la pièce annulaire dentée 12 et de la couronne dentée 13 en regard l'une de l'autre ou adjacentes sont complémentaires et présentent les mêmes dimensions / taille de dent...,
- les parois incurvées de la couronne dentée 13 et de la ceinture 14 en regard l'une de l'autre ou adjacentes sont complémentaires et présentent le même rayon / la même courbure...

En conséquence, on peut accoler les composants les uns aux autres pour que les parois ou parties, de préférence latérales, se touchent ou soient séparées d'un jeu négligeable ce qui permettra de solidariser les composants entre eux lors du traitement thermique.

Avant le traitement thermique, on peut prévoir de positionner sur, dessous ou autour des composants des calages en matière réfractaire pour continuer de plaquer ou d'accoler les composants ensembles jusqu'à ce qu'ils soient solidarisés.

La figure 4 représente une vue en coupe de l'objet décoratif 10 selon la ligne de coupe I-I de la figure 1. On peut noter que les parois ou parties latérales des composants sont inclinées par rapport à la verticale de la figure 4 (la direction de l'épaisseur des composants, et/ou une direction normale au plan de base contenant les faces inférieures des composants). En effet, une telle inclinaison permet de rattraper les jeux et/ou décalages inhérents à la fabrication des composants eux-mêmes, ou alors au préformage de l'ébauche avant traitement thermique, et/ou aux déplacements / déformations crées lors du traitement thermique lui-même.

Chaque paroi ou partie latérale peut être inclinée d'un angle compris dans une plage de valeur allant de 1° à 45°, de préférence de 5° à 30°, de préférence de 5° à 20°. Une telle conformation peut être obtenue par une opération préliminaire d'usinage. Plus particulièrement, entre deux composants adjacents, chaque paroi ou partie latérale peut être inclinée d'un angle identique par rapport à la même direction verticale. En conséquence, l'angle a₁ (entre la verticale et la paroi ou partie latérale d'un premier composant, ici la couronne dentée 13 sur la figure 4) et l'angle a₂ (entre la paroi ou partie latérale d'un deuxième composant et la face inférieure, ici la pièce annulaire dentée 12 sur la figure 4) sont complémentaires et leur somme fait 90°.

On peut aussi noter figure 4 que l'objet décoratif 10 comprend une matière de liaison 21 spécifiquement agencée entre le cœur central 11 et la pièce annulaire dentée 12. Cette matière de liaison peut être déposée lors du préformage de l'ébauche avant le traitement thermique pour faciliter, améliorer ou même générer la solidarisation lors du traitement thermique. La matière de liaison 21 peut être un fondant ou un matière destinée à vitrifier, et peut présenter une température de transition vitreuse ou une température de fusion similaire ou inférieure à celles des autres composants, et/ou à la température maximale du traitement thermique.

Dans cet exemple, la matière de liaison n'est prévue qu'entre le cœur central 11 et la pièce annulaire dentée 12, mais on peut la prévoir entre les autres composants....

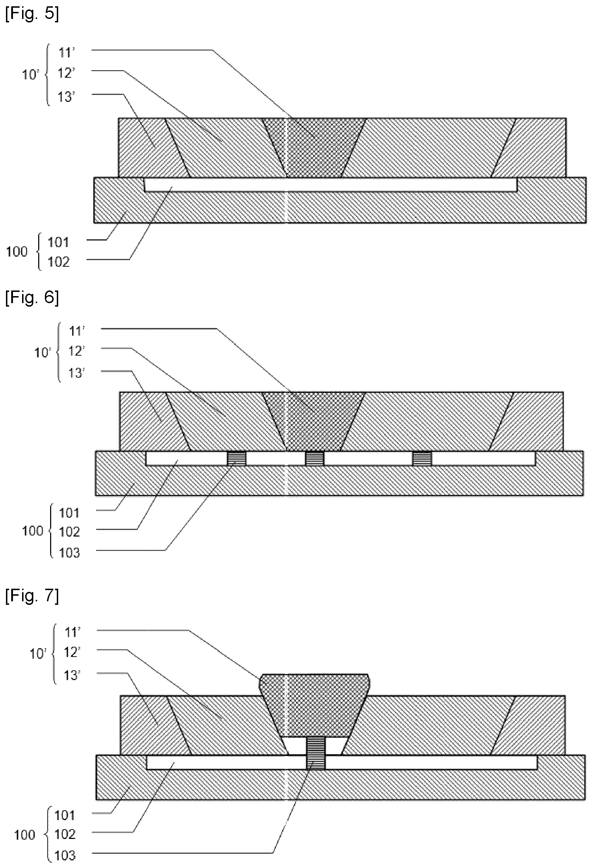

La figure 5 représente une vue en coupe d'une première variante de l'objet décoratif de la figure 1, posé sur un support de cuisson 100. L'objet décoratif 10' de la figure 5 repose sur le support de cuisson 100 et comprend notamment :
- une couronne périphérique 13',
- une pièce intermédiaire 12', emboitée ou reposant ou supportée par la couronne périphérique 13',
- un cœur central 11', emboité ou reposant ou supporté par la pièce intermédiaire 12'.

On peut noter que le support de cuisson 100 est formé par un socle 101 comprenant un évidemment 102, et les composants de l'objet décoratif 10' (la couronne périphérique 13', la pièce intermédiaire 12', le cœur central 11') ont tous des parois latérales usinées ou formées avec un angle de dépouille qui fait qu'ils sont emboîtés les uns dans les autres, et seule la couronne périphérique 13' repose effectivement sur le socle 101 et supporte les autres composants. En conséquence, les autres composants (la pièce intermédiaire 12', le cœur central 11') sont en regard de l'évidemment 102 et ne contactent pas le support de cuisson 100. Ainsi, le poids de ces composants les force à se contacter entre eux et/ou les jeux sont rattrapés.

La figure 6 représente une vue en coupe d'une deuxième variante de l'objet décoratif de la figure 1. La structure de l'objet décoratif 10' de la figure 6 est identique à celle de la figure 5. La seule différence réside dans le fait que le support de cuisson 100 comprend des cales 103 reçues dans l'évidement 102 pour supporter directement la pièce intermédiaire 12' et le cœur central 11'. Ainsi, on peut prévenir des effondrements ou affaissements ou déformations parasites lors du traitement thermique, si certaines ou toutes les pièces sont fines. On peut noter que ces cales 103 peuvent être omises pour certains composants. On peut aussi noter que les épaisseurs des composants peuvent être différentes entre eux, les épaisseurs des cales 103 pouvant être adaptées.

La figure 7 représente une vue en coupe d'une troisième variante de l'objet décoratif de la figure 1. La structure de l'objet décoratif 10' de la figure 6 diffère de celle de la figure 5 en ce que le cœur central 11' présente une épaisseur spécifique et dépasse de la surface supérieure des autres composants. Le support de cuisson 100 comprend une cale 103 reçue dans l'évidement 102 pour supporter directement le cœur central 11'. Ainsi, on peut garantir les différences de niveau des pièces et fabriquer un objet décoratif 10' en relief ou avec des effets 3D, tout en évitant des effondrements ou affaissements ou déformations parasites lors du traitement thermique.

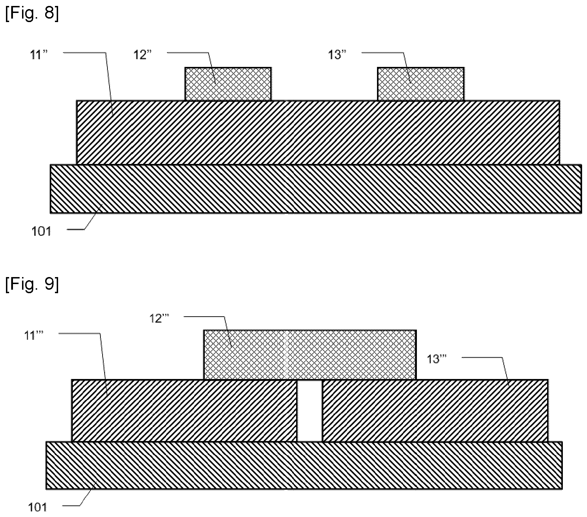

La figure 8 représente une vue en coupe d'une quatrième variante de l'objet décoratif de la figure 1, dans laquelle un socle 101 réfractaire supporte un premier composant 11" de base, sur lequel sont disposés deux deuxièmes composants 12" et 13". Après conduite du procédé de fabrication de la figure 2, les deuxièmes composants 12" et 13" sont complètement solidarisés au premier composant 11".

La figure 9 représente une vue en coupe d'une cinquième variante de l'objet décoratif de la figure 1 dans laquelle un socle 101 réfractaire supporte deux premiers composants 11"' et 13"', sur lesquels est disposé un deuxième composant 12‴ qui forme un pont de liaison. Après conduite du procédé de fabrication de la figure 2, les deux premiers composants 11"' et 13‴ sont complètement solidarisés au deuxième composant 12"'. On peut noter que sur les figures 8 et 9, les composants sont empilés les uns sur les autres. Le propre poids des composants suffit à obtenir un assemblage robuste à l'issue du procédé de fabrications. On peut noter que les surfaces d'appui entre les composants sont planes et horizontales. On peut toutefois prévoir des surface inclinées et complémentaires (pour garantir un contact selon une interface de contact inclinées).

### Application industrielle

Un objet décoratif selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l invention, qui est définie par les revendications.

## Revendications

1. Procédé de fabrication d'un objet décoratif (10 ; 10'), comprenant les étapes suivantes :
- (E11) : se munir d'un premier composant (11, 12, 13, 14 ; 11', 12', 13', 14'), au moins partiellement vitrifié comprenant au moins 40% de silice en poids, formé par exemple en émail, et présentant une première température d'activation,
- (E12) : se munir d'un deuxième composant (12, 13, 14, 11 ; 12', 13', 14', 11'), au moins partiellement vitrifié comprenant au moins 40% de silice en poids, formé par exemple en émail, et présentant une deuxième température d'activation,
- (E20) : préformer une ébauche en accolant au moins une partie, de préférence latérale, du premier composant (11, 12, 13, 14 ; 11', 12', 13', 14') et au moins une partie, de préférence latérale, du deuxième composant (12, 13, 14, 11 ; 12', 13', 14', 11'),
- (E30) : appliquer un traitement thermique en chauffant l'ébauche au moins à une température supérieure à la première température d'activation, et/ou à la deuxième température d'activation pour solidariser le premier composant (11, 12, 13, 14 ; 11', 12', 13', 14') et le deuxième composant (12, 13, 14, 11 ; 12', 13', 14', 11').

2. Procédé de fabrication selon la revendication 1, dans lequel le traitement thermique comprend au moins une étape de refroidissement avec une vitesse de descente en température inférieure à 10°C/minute, de préférence inférieure à 5°C/minute, et de préférence inférieure à 3°C/minute.

3. Procédé de fabrication selon l'une des revendications 1 ou 2, dans lequel le traitement thermique comprend au moins une étape de chauffage avec une vitesse de montée en température inférieure à 15°C/minute, et de préférence inférieure à 10°C/ minute.

4. Procédé de fabrication selon l'une des revendications 1 à 3, dans lequel le traitement thermique comprend au moins une étape de maintien à un palier de température maximale de chauffage d'au moins 15 minutes, de préférence d'au moins 30 minutes et de préférence d'au moins 90 minutes.

5. Procédé de fabrication selon l'une des revendications 1 à 4, dans lequel :
- le préformage de l'ébauche consiste à accoler ladite au moins une partie, de préférence latérale, du premier composant (11, 12, 13, 14 ; 11', 12', 13', 14') et ladite une partie, de préférence latérale, du deuxième composant (12, 13, 14, 11 ; 12', 13', 14', 11') avec un jeu inférieur à 0.15 mm, de préférence inférieur à 0.10 mm, et de préférence inférieur à 0.06 mm.

6. Procédé de fabrication selon l'une des revendications 1 à 5, dans lequel le premier composant (11, 12, 13, 14 ; 11', 12', 13', 14') présente une première face de base plane et/ou le deuxième composant (12, 13, 14, 11 ; 12', 13', 14', 11') présente une deuxième face de base plane, le procédé comprenant une étape initiale consistant à :
- former ou usiner ladite au moins une partie, de préférence latérale, du premier composant (11, 12, 13, 14 ; 11', 12', 13', 14') avec un premier angle incliné par rapport à une normale de la première face de base plane, et/ou
- former ou usiner ladite au moins une partie, de préférence latérale, du deuxième composant (12, 13, 14, 11 ; 12', 13', 14', 11') avec un deuxième angle incliné par rapport à une normale de la deuxième face de base plane.

7. Procédé de fabrication selon la revendication 6, dans lequel le premier angle et/ou le deuxième angle sont compris dans une plage de valeur allant de 1° à 45°, de préférence de 5° à 30°, et de préférence de 5° à 20°.

8. Procédé de fabrication selon l'une des revendications 6 ou 7, dans lequel le premier angle et le deuxième angle sont égaux.

9. Procédé de fabrication selon l'une des revendications 6 à 8, dans lequel le premier angle et le deuxième angle sont complémentaires et/ou prévus pour permettre un emboîtement du deuxième composant (12, 13, 14, 11 ; 12', 13', 14', 11') dans le premier composant (11, 12, 13, 14; 11', 12', 13', 14') lors du préformage de l'ébauche.

10. Procédé de fabrication selon la revendication 9, dans lequel seul le premier composant (11, 12, 13, 14 ; 11', 12', 13', 14') repose sur un support de cuisson, et/ou dans lequel un jeu est prévu entre le deuxième composant (12, 13, 14, 11 ; 12', 13', 14', 11') et le support de cuisson.

11. Procédé de fabrication selon l'une des revendications 1 à 10, comprenant une étape consistant à déposer entre ladite au moins une partie, de préférence latérale, du premier composant (11, 12, 13, 14 ; 11', 12', 13', 14') et ladite au moins une partie, de préférence latérale, du deuxième composant (12, 13, 14, 11 ; 12', 13', 14', 11') une matière de liaison agencée pour fondre ou se vitrifier lors du traitement thermique.

12. Procédé de fabrication selon l'une des revendications 1 à 11, dans lequel la température maximale de chauffage est comprise entre 500°C et 1200°C.

13. Procédé de fabrication selon l'une des revendications 1 à 12, dans lequel le traitement thermique est précédé ou comprend une étape d'agencement ou de positionnement d'au moins un support réfractaire sur le premier composant (11, 12, 13, 14 ; 11', 12', 13', 14') et/ou le deuxième composant (12, 13, 14, 11 ; 12', 13', 14', 11') pour assurer un maintien en place, au moins pendant le traitement thermique, et/ou lors de manipulations avant le traitement thermique.

14. Procédé de fabrication selon l'une des revendications 1 à 13, dans lequel le premier composant (11, 12, 13, 14 ; 11', 12', 13', 14') et/ou le deuxième composant (12, 13, 14, 11 ; 12', 13', 14', 11') :
- présente une épaisseur inférieure à 10 mm, de préférence inférieure à 6 mm, et de préférence inférieure à 3 mm, et/ou
- présente une matière homogène, ou présente une matière hétérogène, telle qu'une matière multicouches ou avec des veines de matières différentes, et/ou
- comprend au moins 50% en masse de silice, de l'alumine, du calcium, du sodium, de l'oxyde de titane, et au moins un colorant, et/ou
- est exempte de substrat ou d'insert métallique, ou de substrat ou d'insert céramique ou de lave, et/ou
- présente au moins une face de base plane.

15. Procédé de fabrication selon l'une des revendications 1 à 14, dans lequel :
- la première température d'activation est une première température dite de strain (ou déformation en langue française) et/ou une première température dite de Littleton (ou point de ramollissement) et/ou une première température dite d'annealing (ou recuit en langue française) et/ou une première température de transition vitreuse et/ou une première température de fusion, et/ou
- la deuxième température d'activation est une deuxième température dite de strain et/ou une deuxième température dite de Littleton (ou point de ramollissement) et/ou une deuxième température dite d'annealing et/ou une deuxième température de transition vitreuse et/ou une deuxième température de fusion.

16. Objet décoratif (10 ; 10') formé par le procédé de fabrication selon l'une des revendications précédentes, comprenant le premier composant (11, 12, 13, 14 ; 11', 12', 13', 14') en émail accolé au deuxième composant (12, 13, 14, 11 ; 12', 13', 14', 11') en émail.

17. Pièce d'horlogerie ou de joaillerie formée par, ou comprenant, un objet décoratif (10 ; 10') selon la revendication précédente.

## Patentansprüche

1. Verfahren zur Herstellung eines dekorativen Gegenstands (10 ; 10'), umfassend die folgenden Schritte:
- (E11): Bereitstellen einer ersten Komponente (11, 12, 13, 14 ; 11', 12', 13', 14'), die mindestens teilweise verglast ist, mindestens 40 Gew.-% Siliciumdioxid umfasst, beispielsweise aus Email gebildet ist und eine erste Aktivierungstemperatur aufweist,
- (E12): Bereitstellen einer zweiten Komponente (12, 13, 14, 11 ; 12', 13', 14', 11'), die mindestens teilweise verglast ist, mindestens 40 Gew.-% Siliciumdioxid umfasst, beispielsweise aus Email gebildet ist und eine zweite Aktivierungstemperatur aufweist,
- (E20): Vorformen eines Rohlings durch Aneinanderfügen mindestens eines Teils, vorzugsweise eines seitlichen Teils, der ersten Komponente (11, 12, 13, 14 ; 11', 12', 13', 14') und mindestens eines Teils, vorzugsweise eines seitlichen Teils, der zweiten Komponente (12, 13, 14, 11 ; 12', 13', 14', 11'),
- (E30): Anwenden einer Wärmebehandlung durch Erwärmen des Rohlings mindestens auf eine Temperatur, die höher als die erste Aktivierungstemperatur und/oder als die zweite Aktivierungstemperatur ist, um die erste Komponente (11, 12, 13, 14 ; 11', 12', 13', 14') und die zweite Komponente (12, 13, 14, 11 ; 12', 13', 14', 11') miteinander zu verbinden.

2. Herstellungsverfahren nach Anspruch 1, wobei die Wärmebehandlung mindestens einen Abkühlschritt mit einer Temperaturabsenkungsgeschwindigkeit von weniger als 10°C/Minute, vorzugsweise weniger als 5°C/Minute und vorzugsweise weniger als 3°C/Minute umfasst.

3. Herstellungsverfahren nach Anspruch 1 oder 2, wobei die Wärmebehandlung mindestens einen Erwärmungsschritt mit einer Temperaturanstiegsgeschwindigkeit von weniger als 15°C/Minute und vorzugsweise weniger als 10°C/Minute umfasst.

4. Herstellungsverfahren nach einem der Ansprüche 1 bis 3, wobei die Wärmebehandlung mindestens einen Schritt des Haltens auf einem Plateau der maximalen Erwärmungstemperatur über mindestens 15 Minuten, vorzugsweise über mindestens 30 Minuten und vorzugsweise über mindestens 90 Minuten umfasst.

5. Herstellungsverfahren nach einem der Ansprüche 1 bis 4, wobei:
- das Vorformen des Rohlings darin besteht, den genannten mindestens einen, vorzugsweise seitlichen Teil der ersten Komponente (11, 12, 13, 14 ; 11', 12', 13', 14') und den genannten Teil, vorzugsweise seitlichen Teil, der zweiten Komponente (12, 13, 14, 11 ; 12', 13', 14', 11') mit einem Spiel von weniger als 0,15 mm, vorzugsweise weniger als 0,10 mm und vorzugsweise weniger als 0,06 mm aneinanderzufügen.

6. Herstellungsverfahren nach einem der Ansprüche 1 bis 5, wobei die erste Komponente (11, 12, 13, 14 ; 11', 12', 13', 14') eine erste ebene Basisfläche aufweist und/oder die zweite Komponente (12, 13, 14, 11 ; 12', 13', 14', 11') eine zweite ebene Basisfläche aufweist, wobei das Verfahren einen Anfangsschritt umfasst, der darin besteht:
- den genannten mindestens einen, vorzugsweise seitlichen Teil der ersten Komponente (11, 12, 13, 14 ; 11', 12', 13', 14') mit einem ersten Winkel zu bilden oder spanend zu bearbeiten, der gegenüber einer Normalen der ersten ebenen Basisfläche geneigt ist, und/oder
- den genannten mindestens einen, vorzugsweise seitlichen Teil der zweiten Komponente (12, 13, 14, 11 ; 12', 13', 14', 11') mit einem zweiten Winkel zu bilden oder spanend zu bearbeiten, der gegenüber einer Normalen der zweiten ebenen Basisfläche geneigt ist.

7. Herstellungsverfahren nach Anspruch 6, wobei der erste Winkel und/oder der zweite Winkel in einem Wertebereich von 1° bis 45°, vorzugsweise von 5° bis 30° und vorzugsweise von 5° bis 20° liegen.

8. Herstellungsverfahren nach Anspruch 6 oder 7, wobei der erste Winkel und der zweite Winkel gleich sind.

9. Herstellungsverfahren nach einem der Ansprüche 6 bis 8, wobei der erste Winkel und der zweite Winkel komplementär sind und/oder so vorgesehen sind, dass sie ein Einsetzen der zweiten Komponente (12, 13, 14, 11 ; 12', 13', 14', 11') in die erste Komponente (11, 12, 13, 14; 11', 12', 13', 14') beim Vorformen des Rohlings ermöglichen.

10. Herstellungsverfahren nach Anspruch 9, wobei nur die erste Komponente (11, 12, 13, 14 ; 11', 12', 13', 14') auf einem Brennträger aufliegt und/oder wobei ein Spiel zwischen der zweiten Komponente (12, 13, 14, 11 ; 12', 13', 14', 11') und dem Brennträger vorgesehen ist.

11. Herstellungsverfahren nach einem der Ansprüche 1 bis 10, umfassend einen Schritt, der darin besteht, zwischen dem genannten mindestens einen, vorzugsweise seitlichen Teil der ersten Komponente (11, 12, 13, 14 ; 11', 12', 13', 14') und dem genannten mindestens einen, vorzugsweise seitlichen Teil der zweiten Komponente (12, 13, 14, 11 ; 12', 13', 14', 11') ein Verbindungsmaterial abzuscheiden, das so ausgebildet ist, dass es bei der Wärmebehandlung schmilzt oder verglast.

12. Herstellungsverfahren nach einem der Ansprüche 1 bis 11, wobei die maximale Erwärmungstemperatur zwischen 500°C und 1200°C liegt.

13. Herstellungsverfahren nach einem der Ansprüche 1 bis 12, wobei der Wärmebehandlung ein Schritt des Anordnens oder Positionierens mindestens eines feuerfesten Trägers auf der ersten Komponente (11, 12, 13, 14 ; 11', 12', 13', 14') und/oder der zweiten Komponente (12, 13, 14, 11 ; 12', 13', 14', 11') vorausgeht oder die Wärmebehandlung diesen umfasst, um ein Halten in Position zumindest während der Wärmebehandlung und/oder während Handhabungen vor der Wärmebehandlung zu gewährleisten.

14. Herstellungsverfahren nach einem der Ansprüche 1 bis 13, wobei die erste Komponente (11, 12, 13, 14 ; 11', 12', 13', 14') und/oder die zweite Komponente (12, 13, 14, 11 ; 12', 13', 14', 11'):
- eine Dicke von weniger als 10 mm, vorzugsweise weniger als 6 mm und vorzugsweise weniger als 3 mm aufweist und/oder
- ein homogenes Material aufweist oder ein heterogenes Material aufweist, wie ein mehrschichtiges Material oder mit Adern aus unterschiedlichen Materialien, und/oder
- mindestens 50 Gew.-% Siliciumdioxid, Aluminiumoxid, Calcium, Natrium, Titanoxid und mindestens einen Farbstoff umfasst, und/oder
- frei von einem metallischen Substrat oder Insert oder von einem keramischen Substrat oder Insert oder einem Lava-Substrat oder -Insert ist, und/oder
- mindestens eine ebene Basisfläche aufweist.

15. Herstellungsverfahren nach einem der Ansprüche 1 bis 14, wobei:
- die erste Aktivierungstemperatur eine erste sogenannte Strain-Temperatur (oder déformation auf Französisch) und/oder eine erste sogenannte Littleton-Temperatur (oder Erweichungspunkt) und/oder eine erste sogenannte Annealing-Temperatur (oder recuit auf Französisch) und/oder eine erste Glasübergangstemperatur und/oder eine erste Schmelztemperatur ist, und/oder
- die zweite Aktivierungstemperatur eine zweite sogenannte Strain-Temperatur und/oder eine zweite sogenannte Littleton-Temperatur (oder Erweichungspunkt) und/oder eine zweite sogenannte Annealing-Temperatur und/oder eine zweite Glasübergangstemperatur und/oder eine zweite Schmelztemperatur ist.

16. Dekorativer Gegenstand (10 ; 10'), gebildet durch das Herstellungsverfahren nach einem der vorhergehenden Ansprüche, umfassend die erste Komponente (11, 12, 13, 14 ; 11', 12', 13', 14') aus Email, die an die zweite Komponente (12, 13, 14, 11 ; 12', 13', 14', 11') aus Email angefügt ist.

17. Uhr oder Schmuckstück, gebildet durch oder umfassend einen dekorativen Gegenstand (10 ; 10') nach dem vorhergehenden Anspruch.

## Claims

1. Method for manufacturing a decorative object (10 ; 10'), comprising the following steps:
- (E11): providing a first component (11, 12, 13, 14 ; 11', 12', 13', 14'), at least partially vitrified, comprising at least 40% by weight of silica, formed for example of enamel, and having a first activation temperature,
- (E12): providing a second component (12, 13, 14, 11 ; 12', 13', 14', 11'), at least partially vitrified, comprising at least 40% by weight of silica, formed for example of enamel, and having a second activation temperature,
- (E20): preforming a blank by joining at least one part, preferably a lateral part, of the first component (11, 12, 13, 14 ; 11', 12', 13', 14') and at least one part, preferably a lateral part, of the second component (12, 13, 14, 11 ; 12', 13', 14', 11'),
- (E30): applying a thermal treatment by heating the blank at least to a temperature higher than the first activation temperature, and/or than the second activation temperature, to join the first component (11, 12, 13, 14 ; 11', 12', 13', 14') and the second component (12, 13, 14, 11 ; 12', 13', 14', 11').

2. Manufacturing method according to claim 1, wherein the thermal treatment comprises at least one cooling step with a temperature decrease rate of less than 10°C/minute, preferably less than 5°C/minute, and preferably less than 3°C/minute.

3. Manufacturing method according to claim 1 or 2, wherein the thermal treatment comprises at least one heating step with a temperature rise rate of less than 15°C/minute, and preferably less than 10°C/minute.

4. Manufacturing method according to any one of claims 1 to 3, wherein the thermal treatment comprises at least one step of maintaining at a maximum heating temperature plateau for at least 15 minutes, preferably for at least 30 minutes and preferably for at least 90 minutes.

5. Manufacturing method according to any one of claims 1 to 4, wherein:
- the preforming of the blank consists in joining said at least one part, preferably lateral, of the first component (11, 12, 13, 14 ; 11', 12', 13', 14') and said one part, preferably lateral, of the second component (12, 13, 14, 11 ; 12', 13', 14', 11') with a gap of less than 0.15 mm, preferably less than 0.10 mm, and preferably less than 0.06 mm.

6. Manufacturing method according to any one of claims 1 to 5, wherein the first component (11, 12, 13, 14 ; 11', 12', 13', 14') has a first planar base face and/or the second component (12, 13, 14, 11 ; 12', 13', 14', 11') has a second planar base face, the method comprising an initial step consisting in:
- forming or machining said at least one part, preferably lateral, of the first component (11, 12, 13, 14 ; 11', 12', 13', 14') with a first angle inclined relative to a normal of the first planar base face, and/or
- forming or machining said at least one part, preferably lateral, of the second component (12, 13, 14, 11 ; 12', 13', 14', 11') with a second angle inclined relative to a normal of the second planar base face.

7. Manufacturing method according to claim 6, wherein the first angle and/or the second angle are within a value range from 1° to 45°, preferably from 5° to 30°, and preferably from 5° to 20°.

8. Manufacturing method according to claim 6 or 7, wherein the first angle and the second angle are equal.

9. Manufacturing method according to any one of claims 6 to 8, wherein the first angle and the second angle are complementary and/or are arranged to allow a nesting of the second component (12, 13, 14, 11 ; 12', 13', 14', 11') in the first component (11, 12, 13, 14; 11', 12', 13', 14') during the preforming of the blank.

10. Manufacturing method according to claim 9, wherein only the first component (11, 12, 13, 14 ; 11', 12', 13', 14') rests on a firing support, and/or wherein a gap is provided between the second component (12, 13, 14, 11 ; 12', 13', 14', 11') and the firing support.

11. Manufacturing method according to any one of claims 1 to 10, comprising a step consisting in depositing, between said at least one part, preferably lateral, of the first component (11, 12, 13, 14 ; 11', 12', 13', 14') and said at least one part, preferably lateral, of the second component (12, 13, 14, 11 ; 12', 13', 14', 11'), a binding material arranged to melt or vitrify during the thermal treatment.

12. Manufacturing method according to any one of claims 1 to 11, wherein the maximum heating temperature is between 500°C and 1200°C.

13. Manufacturing method according to any one of claims 1 to 12, wherein the thermal treatment is preceded by, or comprises, a step of arranging or positioning at least one refractory support on the first component (11, 12, 13, 14 ; 11', 12', 13', 14') and/or on the second component (12, 13, 14, 11 ; 12', 13', 14', 11') in order to ensure a holding in place, at least during the thermal treatment, and/or during handling before the thermal treatment.

14. Manufacturing method according to any one of claims 1 to 13, wherein the first component (11, 12, 13, 14 ; 11', 12', 13', 14') and/or the second component (12, 13, 14, 11 ; 12', 13', 14', 11'):
- has a thickness of less than 10 mm, preferably less than 6 mm, and preferably less than 3 mm, and/or
- has a homogeneous material, or has a heterogeneous material, such as a multilayer material or with veins of different materials, and/or
- comprises at least 50% by weight of silica, alumina, calcium, sodium, titanium oxide, and at least one colourant, and/or
- is free of a metallic substrate or insert, or of a ceramic or lava substrate or insert, and/or
- has at least one planar base face.

15. Manufacturing method according to any one of claims 1 to 14, wherein:
- the first activation temperature is a first temperature called strain (or déformation in French) and/or a first temperature called Littleton (or softening point) and/or a first temperature called annealing (or recuit in French) and/or a first glass transition temperature and/or a first melting temperature, and/or
- the second activation temperature is a second temperature called strain and/or a second temperature called Littleton (or softening point) and/or a second temperature called annealing and/or a second glass transition temperature and/or a second melting temperature.

16. Decorative object (10 ; 10') formed by the manufacturing method according to any one of the preceding claims, comprising the first component (11, 12, 13, 14 ; 11', 12', 13', 14') of enamel joined to the second component (12, 13, 14, 11 ; 12', 13', 14', 11') of enamel.

17. Timepiece or jewellery piece formed by, or comprising, a decorative object (10 ; 10') according to the preceding claim.
